# EUROPEAN PATENT SPECIFICATION

(11) **EP 0 935 409 B1**
(45) Date of publication and mention of the grant of the patent: **08.01.2003**
(21) Application number: 97909495.0
(22) Date of filing: 22.10.1997
(51) Int. Cl.: A01M 31/00, G08B 13/10

(54) **RODENT DETECTION APPARATUS**
NAGETIERE-DETEKTIONSAPPARAT
APPAREIL DE DETECTION DE RONGEURS

(30) Priority: 29.10.1996 GB 9622459
(43) Date of publication of application: 18.08.1999
(73) Proprietor: Rentokil Initial U.K. Limited, East Grinstead, West Sussex RH19 2JY (GB)
(72) Inventor: WILLETTS, Timothy, John, Wolverhampton WV5 0JG (GB); GREGORY, Mark, Cambridge CB1 3SS (GB); SMITH, Colin, Peter, West Sussex (GB)
(74) Representative: Gill, David Alan
(86) International application number: GB9702928
(87) International publication number: WO98018318

(56) References cited:
- WO-A-87/01011
- WO-A-90/10204
- US-A- 4 551 713
- US-A- 4 565 910
- US-A- 5 554 835

## Description

The present invention relates to rodent detection apparatus and in particular, but not exclusively, to a switch arrangement for detecting the presence of a rodent, and to a detection/signalling arrangement for providing a signal indicating the presence of a rodent.

Although rodent detection is generally carried out with the purpose of eliminating rodents from the site where detection occurs, it is not always the case that the rodent is exterminated at the time of detection. Quite often, detection is carried out as an initial step and once the presence of a rodent, such as a mouse, has been detected, further measures are taken in order to exterminate the rodent(s).

For example, mice are currently detected in several ways in that they can be merely observed, their droppings can be observed, damage to products and materials can be noted and bait that is set down in boxes or trays can be frequently inspected to identify if mice have been feeding from the bait.

Such methods of mouse detection have disadvantages since, for example, mice are nocturnal and rarely seen during daylight hours and, further, product/material damage, droppings and bait-removal are all detected "after the event". The time delay to detection can, in some cases, be a matter of weeks. This is particularly disadvantageous since even a relatively temporary incidence of mice can lead to severe problems such as the spreading of diseases and continued damaging and destruction of materials/products.

Known rodent detection systems that can be arranged in an attempt to provide for an instantaneous signalling of the presence of a rodent is disclosed in International Application WO87/01011 in which a plurality of rodent sensor arrangements are arranged to provide a signal to a remotely located control arrangement having a plurality of indicators associated with the respective plurality of sensors. Through constant monitoring of the control apparatus, and the identification of which of the indicators is activated, control personnel can identify which of the sensors has been activated by a rodent. However, the accurate and reliable operation of such a system requires for the controller to immediately recognize the location at which the activated sensor is found and, further, constant monitoring of the control arrangement is also required in order to identify activation of any one or more of the sensors. Such an arrangement is therefore disadvantageous in requiring specialised equipment, and specialised monitoring personnel, and the manner in which the remote sensors are operatively connected to the control arrangement can place restrictions upon the particular locations at which the remote sensors can be positioned. Further, disadvantageous restrictions in the manner in which the sensors can be moved, and generally transferred, around a particular location also arise.

The present invention seeks to provide rodent detection apparatus having advantages over known such apparatus and which can provide for a particularly reliable and effective means of detecting the presence of a rodent and also a readily adaptable means for immediately signalling the presence of a rodent.

Prior art documents US-A-4,551,713 and US-A-4,565,910 relate to pressure activated switches to be activated by hospitalised humans or pets respectively and which do not exhibit a structure having sufficient sensitivity for the possible uses achieved by the present invention.

According to one aspect of the present invention here is provided a pressure pad switch having a first layer comprising a first switch contact surface, a second layer mounted substantially parallel to said first layer and comprising a second switch contact surface, the two layers comprising a membrane switch arrangement, and including insulator spacer means located between said first and second layers and further serving to retain the switch contact surfaces out of contact except when one of the two layers is deformed by the pressure exerted by a rodent, characterized in that the insulating spacer means comprises a printed pattern.

The switch arrangement is particularly advantageous in providing for a relatively simple, and cost effective, means for identifying the presence of a rodent, and one which can be easily positioned at any required location and in particular, at relatively inaccessible locations.

Preferably, the insulating spacer means comprises a printed pattern advantageously of dielectric ink.

Advantageously, at least one of said first and second layers comprises a membrane layer which may comprise the associated contact surface or which may have the contact surface applied thereto. Of course the switch contact surface may be formed integrally with said layer.

In particular, both the first and second layer comprise membrane members presenting mutually opposite switch contact surfaces.

In this manner, the pressure pad arrangement can be arranged to provide for reliable operation irrespective of which of the first and second layers comprises an upper layer when in use.

Advantageously, each of the first and second layers comprises a plastic film and, further, said plastic film can advantageously be coated with a conductive ink so as to provide for said switch contact surfaces.

The two layers of plastic film can be advantageously connected together so that the conductive ink coated surfaces face each other.

Preferably, the conductive ink traces are formed of silver ink traces which are advantageously provided in the form of parallel tracks. The provision of such conductive traces advantageously serves to reduce the amount of somewhat expensive conductive silver ink that is required and can also effectively be employed to ensure that an object greater than 2mm in diameter that impinges on the switch will cause the switch to close.

The first and second layers are preferably formed, or provided, with a flange member extending around the periphery thereof which serves to separate the switch contact surfaces thereof.

Advantageously, an adhesive layer is applied to at least one of the outside faces of said first and second layers so as to allow for the fixing of the pressure pad switch to any required surface.

With regard to a further advantage, a relatively high security connection between the two membrane layers, for example by way of an adhesive region extending around substantially all of the periphery of the mutually opposite faces of the membrane layers, can be provided so as to prevent any distortion, bending, or deformation of the active regions of at least one of the membrane layers which could lead to a full separation, or closure, of the switch. The rigidity afforded by the adhered regions serves to prevent any distortion in exterior portions of the membrane switch being transferred to the aforementioned operative portions. Such exterior regions of the membrane switch may comprise the membrane layer tail which extends away from the active regions of the switch and serves to lead electrical contact lines away from the silver ink traces.

Preferably, the pressure pad switch includes insulating spacer means located between said first and second layers and further serving to retain the switch contact surfaces out of contact except when either one of the two layers is deformed by the pressure exerted by a rodent.

The insulator spacer means may advantageously be provided in the form of blue UV dielectric ink that advantageously serves as an insulator and also serves to prevent oxidization of the silver ink particularly in any exterior regions of the membrane switch such as the aforementioned membrane tail. As will be appreciated, the UV dielectric ink is advantageously provided in the form of thin lines which can be located so as to increase the required operating force in a readily controllable manner. For example, if the dielectric ink lines are formed closer together, the force required to operate the switch is greater.

Advantageously, a plurality of said spacer means are provided between the switch contact surfaces of the first and second layers and can preferably be located in a continuous, even, and/or symmetrical pattern over the lateral extent of the pressure pad switch.

Through employment of said spacer means, the overall shape and dimensions of the pressure pad switch can be readily varied so as to suit any particular application without leading to any detrimental effect relating to the reliability of the switch. However, the separation of the spacer means, either relative to adjacent spacer means, or from the peripheral flange portions of the first and second layers, is maintained so as to ensure accurate operation of the pressure pad.

In accordance with one particularly advantageous aspect of the present invention, said spacer means comprises an oval insulating means and, according to another particularly advantageous aspect, the spacer means comprise a plurality of small islands, for example in the form of dots, located between the switch contact surfaces of the first and second layers.

Advantageously, the spacer means are formed on at least one of the switch contact surfaces prior to the formation of the sandwich formed by the first and second layers of the pressure pad.

The pressure pad switch is advantageously arranged with electrical contacts so that a signal can be provided by way of said contacts upon activation of the pressure pad, i.e. upon contact being made between the switch contact surfaces of the first and second layers and, further, control electronics can then be associated with the pressure pad switch and which is arranged to monitor the number of contacts made between the switch contact surfaces.

The control electronics can advantageously comprise counter means which serve to control the generation of a rodent/identification signal only once a threshold number of switch closures, i.e. instances of contact between the switch contact surfaces of the first and second layers, have been made.

Alternatively, two switches in an AND, or in an OR, configuration can be provided and which serve to either reduce false alarms and/or increase sensitivity as required.

In this manner, the apparatus of the present invention can advantageously make allowances for any erroneous, and isolated, switch activations that occur by only allowing for the delivery of a rodent/identification signal from the control electronics once the aforementioned threshold value has been exceeded.

The first and second layers of the pressure pad switch can then be provided without the aforementioned spacer means since, in view of the control electronics discussed above, the improved reliability of operation provided by the spacer means becomes a less important requirement.

Preferably, the pressure pad switch of the present invention is provided with vent means for communicating the inter-layer space with atmosphere so as to allow the pressure within the space formed between the first and second layers of the pressure pad to follow atmospheric pressure.

Advantageously, the vent is provided by forming an aperture extending through the peripheral regions of the first and/or second layers so that the vent appears in the side surface of the pressure pad rather than in either of the upper or lower surfaces.

Preferably, the vent is formed at the time of providing the aforementioned flange arrangement when contacting said first and second layers. Thus, the vent can be formed by providing a groove within such a flange arrangement upon fixing the periphery of one layer to the flange.

Providing the venting aperture in this manner is particularly advantageous in that the dimensions of the venting aperture can be advantageously restricted so as to prevent the ingress of water into the inter-layer space within the pressure pad.

As will be appreciated, any ingress of water into the inter-layer space would result in short circuiting the switch arrangement so as to provide for erroneous rodent/detection signals.

Thus, in restricting the dimensions of the venting aperture, water can be prevented from entering the inter-layer space of the pressure pad due to the surface tension exhibited by the water.

Such a venting feature is particularly advantageous since, without connecting the inter-layer space of the pressure pad to atmosphere, the pressure within that space will vary in relation to ambient temperature so that the sensitivity of the pressure pad switch will vary and so will not then be readily determinable. With the venting aperture, the volume of air within the inter-layer space will not then expand and contract as a result of changes in the ambient temperature.

A particular advantage of the present invention relates to the small switch dimensions that can be achieved while retaining accurate operability. As an example, a switch having dimension 17mm X 21mm X 0.7mm can be achieved and in most instances a switch having a surface area between 15mm² and 30mm²,and a depth of 0.5mm to 1mm would be used.

The present invention also provides for a rodent detector comprising a pressure pad switch means as defined above and arranged within an enclosure to be activated by a rodent, housing means having the switch means mounted therein, on-board power supply means and an electronic driver circuit arranged to generate a signal in response to activation of the switch by rodent and serving to drive an audio and/or visual signalling means mounted on the housing means.

This is particularly advantageous in that the rodent detector apparatus comprises a relatively small and readily portable device which can be moved and positioned, an any particular location and, as required, readily transferred between different locations.

Also, the audio and/or visual signalling means advantageously provides for a readily detectable signal immediately upon identification of a rodent, which signal can be detected by any personnel located either temporarily, or permanently, within the vicinity of the rodent detector.

The driver electronics can be arranged to continually drive the audio and/or visual signalling means so as to emit the appropriate audio and/or visual signal until such time as the device is switched off by a user or until such time as the on-board power source is exhausted.

Since the rodent detector can be readily re-set, activation by a rodent need not necessarily lead to the exhaustion of the on-board power supply and the device can be readily re-set for further use either at the same, or different, location.

As will be appreciated, the various aspects of the present invention allow for, for example, mouse detection to be carried out simultaneously with the mouse investigating the detector apparatus and, further, the invention advantageously reduces the amount of pesticide often required and the potential damage, and associated distress, that rodents such as mice can cause.

The invention generally offers a simpler, cleaner, more effective and readily transferable means for detecting rodents.

The invention is described further hereinafter, by way of example only, with reference to the accompanying drawings in which:
Fig. 1 is a plan view of a pressure pad embodying one aspect of the present invention;
Fig. 2 is an exploded cross-sectional view of the pressure pad of Fig. 1;
Fig. 3 is a view similar to that of Fig. 2 but with the pressure pad in an assembled form;
Figs. 4a and 4b illustrate plan views of upper and lower membrane layers according to another embodiment of the present invention;
Figs. 5a and 5b illustrate plan views of upper and lower membrane layers according to yet another embodiment of the present invention;
Fig. 6 is an elevational view of a membrane switch constructed from layers of Figs. 5a and 5b when joined together;
Fig. 7 is a side view of a mouse detector box according to one embodiment of the present invention;
Fig. 8 is a plan view of the box of Fig. 7 but with the lid pivoted into an open condition; and
Fig. 9 is a block diagram of the developments of the arrangement of Fig. 8.

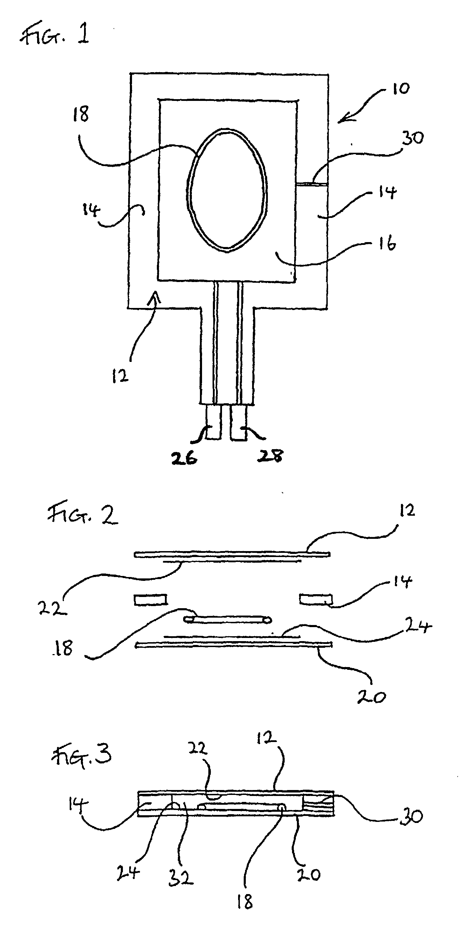

With reference to Figs. 1, 2 and 3, there is illustrated one particular embodiment of a pressure pad according to one aspect of the present invention in which the pressure pad 10 is generally rectangular in form.

The pressure pad comprises an upper layer 12 disposed above, and parallel to, a lower layer 20 wherein each layer 12, 20 comprises a membrane layer formed of a plastic film.

As seen more clearly in Figs. 2 and 3, each of the plastic film layers 12, 20 is coated, on mutually opposing surfaces, with a conductive ink layer 22, 24 respectively.

The pressure pad layers 12, 22; 20, 24 thereby formed are retained out of contact first by a rectangular flange 14 which extends around the periphery of the membrane layers 12, 20 and, further, by an overall insulating spacer member 18 which is formed upon the insulating ink layer 24 of the membrane layer 20.

The particular form of the insulating spacer member 18 is clearly illustrated with reference to Fig. 1 and, with reference to Fig. 3, it will be appreciated that the spacer member 18 can serve to prevent the conductive ink surfaces 22, 24 of the pressure pad 10 entering into contact due to wear of the device which might otherwise cause the upper layer 22 (as shown in Fig. 3) to sag, or otherwise permanently deform, so that the respective conductive ink surfaces of each of the layers 12, 20 come into contact.

The spacing achieved by the insulating spacer member 18 advantageously allows for the provision of a relatively large pressure pad whilst likewise preventing erroneous operation of the switch element formed by the conductive ink traces on the respective membrane layers 12, 20. For example, a pressure pad having dimensions in excess of 30 mm X 30 mm can be provided in accordance with the present invention.

With reference to Fig. 1, it will be appreciated that electrical contact is made to the two conductive ink traces 5 22, 24 by means of electrical contacts, 26, 28 such that the deformation of the upper membrane layer 12 so as to achieve contact between the respective conductive ink traces 22, 24 (i.e. when a rodent such as a mouse steps on the active area of the pressure pad 10) serves to close the circuit established by way of electrical contacts 26, 28 so that, for example, appropriate drive electronics can be arranged to drive an audio and/or visual signalling arrangement.

With further reference to Figs. 1 and 3, there is illustrated a venting aperture 30 which serves to equalize the pressure within the inter-layer space 32 (see Fig. 3) with atmospheric pressure. This further reduces the likelihood of erroneous operation of the pressure pad since any variations in the pressure within the inter-layer space 32 are prevented by means of the venting aperture 30.

Thus, as will be appreciated, should a rodent step upon the operative portion of the pressure pad, i.e. the surface area bound by the flange 14, and either side of the oval spacer member 18, the switch formed by the conductive ink traces 22, 24 is closed so that an appropriate audio and/or visual signal can be generated.

As a further advantage, at least one of the outer surfaces of the layers 12, 20 is provided with an adhesive coating, which may be selectively exposable, so that the pressure pad can be positioned at any required location with a certain degree of security.

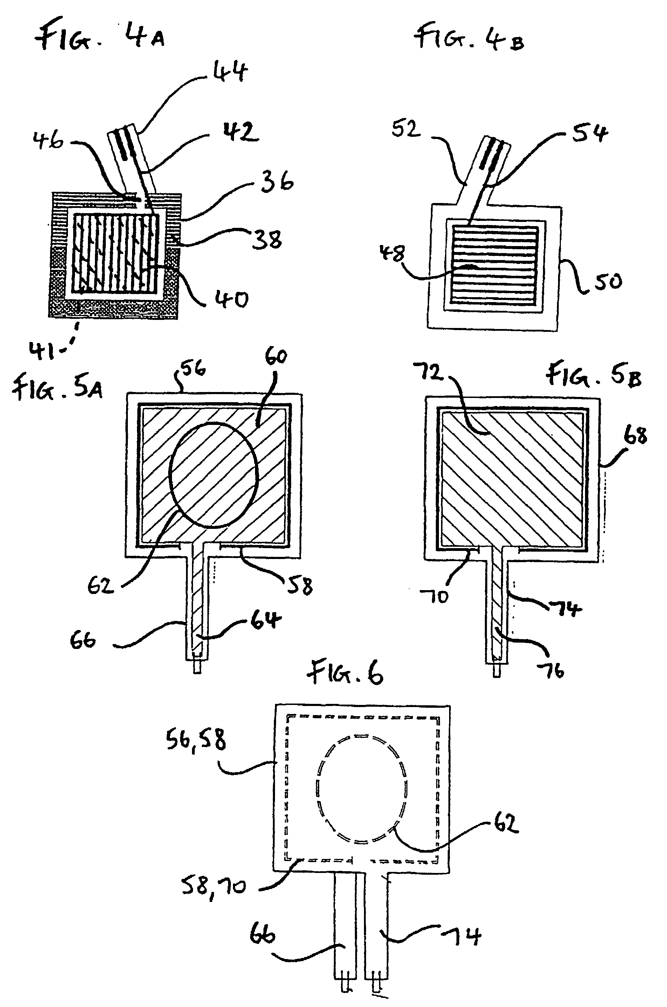

Turning now to Figs. 4a and 4b, there is illustrated respective upper and lower membrane layers according to another embodiment of the present invention. An upper membrane layer 36 is shown in Fig. 4a and has a peripheral band of spacer adhesive 38 extending around the outer portion thereof. Within the inner region of the membrane layer 36, i.e. the active region, there is provided parallel conductive tracks 40 formed of silver ink and which are electrically connected by way of a silver ink contact 42 to the outer portions of a membrane layer tail 44 for connection to the remaining circuitry connected to the control electronics associated with the switch arrangement. In Fig. 4B a similar arrangement of conductive tracks 48, tail 52 and contact 54 is provided for the lower membrane 50. It will be appreciated that, when assembled, the conductive tracks 40,48 are orthogonal and, advantageously, the insulating spacer 41 (see Fig. 4A) can be in the form of parallel lines at 45° to both sets of conductive tracks 40, 48.

As will be appreciated, the peripheral band of spacer adhesive 38 does not extend in a continuous manner around the outer periphery of the membrane layer 36 since a gap 46 is provided which serves as the venting aperture of the switch arrangement of Figs. 4a and 4b once assembled.

The circuit spacer can advantageously be formed from Fasson 1211 double sided acrylic adhesive having a thickness of 0.127mm.

As noted previously, it is a particular advantageous feature of the present invention that the inner region of the active area of the switch is vented to atmosphere in that this provides a switch which can operate reliably in response to readily determined low operating forces. The vending to atmosphere also prevents full switch operation due to barometric pressure, and temperature, variations.

Turning now to Figs. 5a and 5b, there is illustrated respective plan views of a lower plastic film layer 56 and another plastic film layer 68.

The lower plastic film layer 56 is provided, around the region of its outer periphery, with an insulating strip 58 which serves to bound the active area of the switch in which a conductive ink pattern 60 is provided.

An ovoid insulating spacer pattern 62 is formed on the conductive ink pattern 60 of the lower film layer 56 and, as before, once film layers 56, 68 are sandwiched together, the spacer pattern 62 serves to retain the conductive ink patterns 60, 72 out of contact. A conductive ink connection 64 is provided which extends from the active region of the switch along a plastic film layer tail 66 for connection to the control electronics associated with the switch. Fig. 5b illustrates the upper plastic film layer 68 having a conductive ink pattern 72 formed on the underside thereof and which is bounded by an insulating strip 70. As with the conductive ink pattern 60 of the lower film layer 56, the conductive ink pattern 72 of the upper film layer 68 is provided with a connecting extension 76 which extends along a plastic film layer tail 74 for connection of the conductive ink pattern 72 of the upper plastic layer 68 with the control electronics.

As a particularly preferred alternative, the spacer can be provided in the form of a plurality of parallel lines positioned so as to intersect the lines of the ink patterns 60, 72.

If the lines of the ink pattern 60, 72 are orthogonal, then the lines of the spacer can be at 45° to the lines of both patterns 60, 72 in a similar manner to that represented by dotted lines 41 in Fig. 4A.

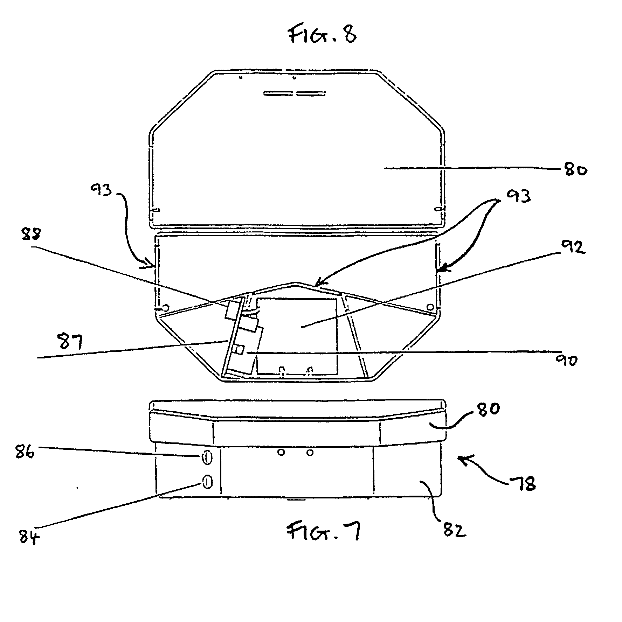

Once the upper and lower plastic film layers 56, 68 are sandwiched together for operation, the switch has the appearance as illustrated in Fig. 6. As will be appreciated, the two film layer tails 66, 74 extend away from the active regions of the switch in an adjacent, and parallel, manner and this serves to provide for an easy and tidy connection of the switch to the control electronics.

In order to achieve this connection, it will be appreciated that it is quite often necessary to bend, or generally distort, the plastic film layer tails 66, 74. Such distortion of these tails could have a disadvantageous effect on the portions of the plastic film layers 56, 68 forming the active regions in that distortion of the tails 66, 74 could be transferred to the active regions of the switches so as to cause false readings.

However, in accordance with one particular feature the present invention, any required distortion of the plastic 5 film layer tails 66, 74 is isolated from the active region of the plastic film layers 56, 68 by means of the insulating strips 58, 70 in Figs. 5a and 5b, or by means of the peripheral band of spacer adhesive 38 in Fig. 4a which serve to prevent any distortion of the membrane switch tail being transferred into the active region of the switch.

Turning now to Fig. 7, there is illustrated a side elevational view of a mouse detector box according to one embodiment of the present invention. The box generally 5 comprises a box 78 having a lid 80 pivotally connected to a base portion 82 in which there is provided an aperture 84 for providing access to a reset switch and a further aperture 86 for receiving a visual indicator means such as a light emitting diode.

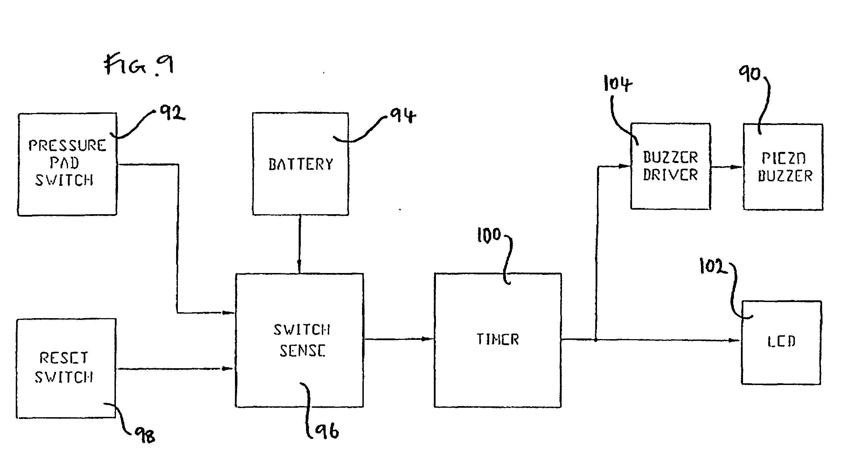

Fig. 8 illustrates the box 78 of Fig. 7 in an open condition, i.e. with the lid 80 pivoted away from the base 82 and the generally compact nature of a box according to the present invention can be appreciated. Within a central chamber of the box 78 there is provided the control electronics associated with the detection/signalling arrangement and this includes a printed circuit board assembly 87 having a battery holder 88 mounted thereon along with an audio signalling means such as a buzzer 90. A membrane switch 92 according to one particular aspect of the present invention is located adjacent the assembly 87 and so as to provide for an electrical signal when a rodent, for example mouse, enters the box 78 and impinges on the membrane switch 92. A rodent will enter the box 78, and arrive at the chamber housing the switch 92, by way of access apertures 93.

Finally, Fig. 9 is a block diagram which serves to further illustrate the manner in which the control electronics, the output electronics and the switching electronics are connected such that the closing of the pressure pad switch 92 by way of a rodent stepping thereon, is sensed by a switch sense arrangement 96 and which, under the control of the timer 100, then serves to drive a piezo buzzer arrangement 90 by way of a buzzer driver 104 and also a light emitting diode 102. A battery 94 is provided to be mounted within the battery holder 88 illustrated in Fig. 8 and a reset switch 98 is provided for the arrangement, and in particular is connected to the switch sense arrangement 96, and can be accessed by way of the aperture 84 illustrated in Fig. 7.

With regard to the particular materials that may be employed to form the pressure pad switch, the switch area, and tail portion, of each of the membrane layers may advantageously be formed of thermally stabilized polyester having a thickness of 0.125 mm and provided with a conductive silver ink pattern printed thereon. The switch area and tail portion of the lower membrane can also be formed from thermally stabilised polyester having a thickness of 0.125 mm which, in addition to conductive silver ink, is provided with UV dielectric insulating ink pattern printed on the surface thereof.

Of course, it should be appreciated that the present invention is not restricted to the details of the foregoing embodiment. For example, the various elements of the pressure pad as illustrated in the drawings can be provided in any appropriate dimension and shape, and in particular, can be formed of any appropriate material. Most importantly, it should be considered that the spacing pattern formed by the insulating ink 18 can be provided in any appropriate shape or form, and even as a plurality of spaced islands, having regard to the particular operational characteristics required of the pressure pad. Further, although, with reference to Fig. 3, the layer 12 is referred to as the upper layer, the pressure pad can be arranged so that the layer 12 forms the lower layer and thus the layer 20 forms the upper layer.

Of course, the peripheral flange member 14 can be formed of any appropriate material and, in some instances, could be formed integral with either one of the membrane layers 12, 20.

## Claims

1. A pressure pad switch (10) having a first layer (12) comprising a first switch contact surface (22), a second layer (20) mounted substantially parallel to said first layer and comprising a second switch contact surface (24), the two layers comprising a membrane switch arrangement, and including insulator spacer means located between said first and second layers and further serving to retain the switch contact surfaces out of contact except when one of the two layers is deformed by the pressure exerted by a rodent, **characterized in that** the insulating spacer means comprises a printed pattern.

2. A switch as claimed in Claim 1, wherein said insulating spacer means comprises ink.

3. A switch as claimed in Claim 1 or 2, wherein the spacer means comprises an oval insulating mens.

4. A switch as claimed in any one of Claims 1 to 3, wherein the spacer means comprises a plurality of small islands located between the switch contact surfaces of the first and second layers.

5. A switch as claimed in Claims 1 to 4, wherein the spacer means is in the form of a plurality of substantially parallel elongate portions.

6. A switch as claimed in Claim 5, wherein the spacer means comprises a plurality of parallel lines.

7. A switch as claimed in Claim 5 or 6, wherein both said contact surfaces have orthogonal longitudinal dimensions and the spacer means extends substantially at 45° to the directions of both said dimensions.

8. A switch as claimed in any one of the preceding claims, wherein each of the first and second layers comprises a plastic film.

9. A switch as claimed in any one of the preceding claims, and wherein said contact surface is formed of a conductive ink.

10. A switch as claimed in any one of the preceding claims wherein at least one of the contact switches is in the form of parallel tracks.

11. A switch as claimed in any one of the preceding claims, and provided with a peripheral region having a flexibility that is less than the operative region of the layer and serving to prevent any distortion in regions of the layers remote from the operative region being transmitted to the portions of the layers defining the operative regions thereof.

12. A switch as claimed in Claim 11, wherein the said regions of the layers remote from the operative region serve to lead electrical contact lines away from the contact surfaces.

13. A switch as claimed in any one of the preceding claims and arranged with control electronics including counting means which serve to control the generation of a rodent/identification signal only once a threshold number of switch closures has been detected.

14. A switch as claimed in any one of the preceding claims, and including vent means for communicating the inter-layer space with atmosphere so as to allow the pressure within the space formed between the first and second layers of the pressure pad to follow atmospheric pressure.

15. A switch as claimed in Claim 14, wherein the vent is provided by forming an aperture extending through peripheral regions of the first and/or second layers so that the vent appears at the side edge of the pressure pad switch.

16. A switch as claimed in Claim 15, wherein the vent is formed by means of a groove on a flange arrangement formed at the periphery of at least one of the layers.

17. A switch as claimed in Claim 14, 15 or 16, wherein the vent means is dimensioned so as to prevent water from entering the inter-layer space of the pressure pad due to the surface tension exhibited by water.

18. A pressure pad switch arrangement comprising at least two switches as claimed in any one of claims 1 to 18, and connected to a logic circuit for providing an output signal in response to a particular combination of input signals from the switches.

19. A rodent detector comprising a housing for receiving a pressure pad switch as claimed in any one of Claims 1 to 17, and for mounting control electronics associated with said pressure pad switch.

20. A detector as claimed in Claim 19, wherein the housing comprises an enclosed space into which the rodent enters in order to activate the pressure pad switch.

## Patentansprüche

1. Druckkissenschalter (10) mit einer ersten Schicht (12), die eine erste Schalterkontaktfläche (22) aufweist, einer zweiten Schicht (20), die im wesentlichen parallel zu der genannten ersten Schicht angebracht ist und eine zweite Schalterkontaktfläche (24) aufweist, wobei die beiden Schichten eine Membranschalteranordnung aufweisen und ein Isolierabstandshaltemittel umfassen, das zwischen der genannten ersten und zweiten Schicht angeordnet ist und weiter zum Halten der Schalterkontaktflächen außer Kontakt dient, außer wenn eine der beiden Schichten durch den durch ein Nagetier ausgeübten Druck verformt wird, **dadurch gekennzeichnet, dass** das Isolierabstandshaltemittel ein gedrucktes Muster aufweist.

2. Schalter nach Anspruch 1, bei dem das genannte Isolierabstandshaltemittel Tinte aufweist.

3. Schalter nach Anspruch 1 oder 2, bei dem das Abstandshaltemittel ein ovales Isoliermittel aufweist.

4. Schalter nach einem der Ansprüche 1 bis 3, bei dem das Abstandshaltemittel eine Anzahl kleiner Inseln aufweist, die zwischen den Schalterkontaktflächen der ersten und zweiten Schicht angeordnet sind.

5. Schalter nach den Ansprüche 1 bis 4, bei dem das Abstandshaltemittel in der Form einer Mehrzahl im wesentlichen paralleler länglicher Teile vorliegt.

6. Schalter nach Anspruch 5, bei dem das Abstandshaltemittel eine Anzahl paralleler Linien aufweist.

7. Schalter nach Anspruch 5 oder 6, bei dem beide der genannten Kontaktoberflächen orthogonale Längsabmessungen aufweisen und das Abstandshaltemittel sich im wesentlichen bei 45° zu den Richtungen beider der genannten Abmessungen erstreckt.

8. Schalter nach einem der vorhergehenden Ansprüche, bei dem jede der ersten und zweiten Schicht einen Kunststofffilm aufweist.

9. Schalter nach einem der vorhergehenden Ansprüche, bei dem die genannte Kontaktfläche aus einer leitfähigen Tinte gebildet ist.

10. Schalter nach einem der vorhergehenden Ansprüche, bei dem wenigstens einer der Kontaktschalter in der Form paralleler Spuren vorliegt.

11. Schalter nach einem der vorhergehenden Ansprüche, der weiter mit einem Umfangsbereich mit einer Flexibilität versehen ist, die kleiner als der Arbeitsbereich der Schicht ist und dazu dient, eine jegliche Verzerrung in Bereichen der Schichten entfernt von dem Arbeitsbereich zu verhindern, die zu den Teilen der Schichten übertragen werden, die Arbeitsbereiche derselben definieren.

12. Schalter nach Anspruch 11, bei dem die genannten von dem Arbeitsbereich entfernten Bereiche der Schichten dazu dienen, elektrische Kontaktleitungen von den Kontaktflächen weg zu leiten.

13. Schalter nach einem der vorhergehenden Ansprüche, der mit Steuerelektronik eingerichtet ist, die Zählmittel umfasst, welche zum Steuern der Erzeugung eines Nagetier/Identifikationssignals nur dann dienen, wenn ein Grenzwert von Schalterschließungen erfasst worden ist.

14. Schalter nach einem der vorhergehenden Ansprüche, der ferner Lüftungsmittel zum Verbinden des Raums zwischen den Schichten mit Atmosphäre umfasst, um so den Druck innerhalb des zwischen der ersten und zweiten Schicht gebildeten Raums des Druckkissens Atmosphärendruck folgen zu lassen.

15. Schalter nach Anspruch 14, bei dem die Lüftung durch Bilden einer Öffnung durch die Umfangsbereiche der ersten und/oder zweiten Schicht so vorgesehen wird, dass die Lüftung an der Seitenkante des Druckkissenschalters erscheint.

16. Schalter nach Anspruch 15, bei dem die Lüftung mittels einer Nut an einer Flanschanordnung gebildet wird, die am Umfang wenigstens einer der Schichten gebildet wird.

17. Schalter nach Anspruch 14, 15 oder 16, bei dem das Lüftungsmittel solche Abmessungen aufweist, um Eintritt von Wasser in den Raum zwischen den Schichten des Druckkissens aufgrund von durch Wasser gezeigter Oberflächenspannung zu verhindern.

18. Druckkissenschalteranordnung mit wenigstens zwei Schaltern nach einem der Ansprüche 1 bis 18, die ferner an eine Logikschaltung zum Liefern eines Ausgangssignals als Reaktion auf eine bestimmte Kombination von Eingangssignalen von den Schaltern angeschlossen ist.

19. Nagetierdetektor mit einem Gehäuse zum Aufnehmen eines Druckkissenschalters nach einem der Ansprüche 1 bis 17, und zum Anbringen von mit dem genannten Druckkissenschalter verknüpfter Steuerelektronik.

20. Detektor nach Anspruch 19, bei dem das Gehäuse einen umschlossenen Raum aufweist, in den das Nagetier zum Aktivieren des Druckkissenschalters eindringt.

## Revendications

1. Interrupteur (10) à patin de pression ayant une première couche (12) comprenant une première surface de contact (22) d'interrupteur, une deuxième couche (20) montée essentiellement en parallèle à ladite première couche et comprenant une deuxième surface de contact (24) d'interrupteur, les deux couches comportant un agencement d'interrupteur à membrane, et incluant un moyen d'entretoise d'isolation qui est placé entre lesdites première et deuxième couches, et servant en outre à maintenir hors de contact les surfaces de contact d'interrupteur, sauf lorsque l'une des deux couches est déformée par la pression exercée par un rongeur, **caractérisé en ce que** le moyen d'entretoise d'isolation comporte un motif imprimé.

2. Interrupteur, selon la revendication 1, dans lequel ledit moyen d'entretoise d'isolation comprend de l'encre.

3. Interrupteur, selon la revendication 1 ou 2, dans lequel ledit moyen d'entretoise d'isolation comprend un moyen d'isolation ovale.

4. Interrupteur, selon l'une quelconque des revendications 1 à 3, dans lequel ledit moyen d'entretoise comprend une pluralité de petits îlots qui sont placés entre les surfaces de contact d'interrupteur des première et deuxième couches.

5. Interrupteur, selon l'une quelconque des revendications 1 à 4, dans lequel ledit moyen d'entretoise se présente sous la forme d'une pluralité de sections allongées essentiellement parallèles.

6. Interrupteur, selon la revendication 5, dans lequel ledit moyen d'entretoise comprend une pluralité de lignes parallèles.

7. Interrupteur, selon la revendication 5 ou 6, dans lequel les deux desdites surfaces de contact possèdent des dimensions longitudinales orthogonales et le moyen d'entretoise s'étend essentiellement à un angle de 45° par rapport aux directions des deux desdites dimensions.

8. Interrupteur, selon l'une quelconque des revendications précédentes, dans lequel chacune des première et deuxième couches comporte un film plastique.

9. Interrupteur, selon l'une quelconque des revendications précédentes, et dans lequel ladite surface de contact est constituée d'une encre conductrice.

10. Interrupteur, selon l'une quelconque des revendications précédentes, dans lequel l'un au moins des interrupteurs de contact se présente sous la forme de pistes parallèles.

11. Interrupteur, selon l'une quelconque des revendications précédentes, et muni d'une zone périphérique ayant une flexibilité qui est inférieure à celle de la zone opérationnelle de la couche et servant à empêcher toute distorsion, dans les zones des couches qui sont éloignées de la zone opérationnelle, d'être transmise aux sections des couches définissant les zones opérationnelles de celles-ci.

12. Interrupteur, selon la revendication 11, dans lequel lesdites zones des couches, qui sont éloignées de la zone opérationnelle, servent à éloigner les lignes de contact électriques des surfaces de contact.

13. Interrupteur, selon l'une quelconque des revendications précédentes, et équipé de circuits électroniques de contrôle, y compris un moyen de comptage, qui servent à contrôler la génération d'un signal de rongeur / d'identification seulement lorsqu'un niveau-seuil de fermetures d'interrupteur a été détecté.

14. Interrupteur, selon l'une quelconque des revendications précédentes, et incluant un moyen d'évent pour faire communiquer l'espace inter-couches avec l'atmosphère, afin de permettre à la pression, présente dans l'espace formé entre les première et deuxième couches du patin de pression, de suivre la pression atmosphérique.

15. Interrupteur, selon la revendication 14, dans lequel l'évent est prévu en formant une ouverture qui s'étend à travers les zones périphériques de la première et/ou de la deuxième couches, de telle sorte que l'évent apparaisse sur le bord latéral de l'interrupteur à patin de pression.

16. Interrupteur, selon la revendication 15, dans lequel l'évent est formé grâce à une rainure sur un agencement à bride formé sur la périphérie de l'une au moins des couches.

17. Interrupteur, selon la revendication 14, 15 ou 16, dans lequel le moyen d'évent est dimensionné de façon à éviter toute pénétration d'eau dans l'espace inter-couches du patin de pression en raison de la tension superficielle propre à l'eau.

18. Agencement d'interrupteur à patin de pression comprenant au moins deux interrupteurs, selon l'une quelconque des revendications 1 à 18, et connecté à un circuit logique afin de fournir un signal de sortie en réaction à une combinaison particulière de signaux d'entrée provenant des interrupteurs.

19. Détecteur de rongeurs comprenant un logement destiné à recevoir un interrupteur à patin de pression, selon l'une quelconque des revendications 1 à 17, et à monter les circuits électroniques de contrôle qui sont associés audit interrupteur à patin de pression.

20. Détecteur, selon la revendication 19, dans lequel le logement comprend un espace fermé dans lequel le rongeur entre, afin d'activer l'interrupteur à patin de pression.
